# EUROPEAN PATENT SPECIFICATION

(11) **EP 3 367 599 B1**
(45) Date of publication and mention of the grant of the patent: **22.04.2020**
(21) Application number: 17020073.7
(22) Date of filing: 28.02.2017
(51) Int. Cl.: H04L 29/08, H04L 1/16, H04L 29/06, H04L 1/18

(54) **METHOD AND SYSTEM FOR TRANSFERRING DATA WITHIN A LAYERED ARCHITECTURE OF NETWORK COMPONENTS**
VERFAHREN UND SYSTEM ZUR ÜBERTRAGUNG VON DATEN IN EINER GESCHICHTETEN ARCHITEKTUR VON NETZWERKKOMPONENTEN
PROCÉDÉ ET SYSTÈME POUR TRANSFÉRER DES DONNÉES DANS UNE ARCHITECTURE EN COUCHES DE COMPOSANTES DE RÉSEAU

(43) Date of publication of application: 29.08.2018
(73) Proprietor: Deutsche Telekom AG, 53113 Bonn (DE)
(72) Inventor: VAN DEN Berge, Fridtjof, 53227 Bonn-Oberkassel (DE)
(74) Representative: Raible Deissler Lehmann Patentanwälte PartG mbB

(56) References cited:
- US-A- 6 091 710
- US-B1- 6 694 471

## Description

The present invention generally relates to a method, an apparatus and a system for transmission of data within a layered architecture of network components and, more specifically, to a method, an apparatus and a system for confirming receipt of data transferred within a layered architecture of network components.

As computer systems become more and more common at the workplace and at home, the demand for transmission of information between these computer systems is increasing. After file-sharing, e-commerce and social media, the interlinkage of things and devices, namely the Internet of Things (loT) establishes a next generation of the Internet. The respective devices encompass sensors, security cameras, vehicles, production machines, etc. The Internet of Things is the internetworking of physical devices, vehicles, buildings and other items, embedded with electronics, software, sensors, actuators, and network connectivity that enables these objects to collect and exchange data. The Internet of Things allows objects to be sensed and/or controlled remotely across an existing network infrastructure. When the Internet of Things is augmented with sensors and actuators, the Internet of Things becomes an instance of a more general class of cyber-physical systems, which also encompasses technology such as smart grids, smart homes, intelligence transportation and smart cities. The Internet of Things offers advanced connectivity of devices, systems and services and goes beyond machine-to-machine communications and covers a variety of protocols, domains and applications. Things, in the sense of the Internet of Things, can refer to a wide variety of devices, such as hard monitoring implants, biochip transponders or field operation devices that assist firefighters in search and rescue operations. As such, it is clear that the loT consists of a very large number of devices being connected to the Internet. Integration with the Internet implies that these devices will use an IP-address as an unique identifier.

Particularly, the Internet of Things requires coping with a huge amount of signals due to the related ambitious computing, based upon the quantity of messages, but not on the content sizes, next to the other IP-traffic. A less effort in signaling as well as a reduction in processor-load, memory-usage and battery-utilization would be desirable for both, the transmission via direct wired and/or radio network and the loT-enabled objects.

Therefore, it was an object of the present invention to provide a possibility to optimize the transmission of data acquisition information and control commands between computers, respectively processors, while providing reliable messaging.

As of May 1974, the Institute of Electrical and Electronic Engineers (IEEE) published a paper titled "A Protocol for Packet Network Intercommunication", in which an internetworking protocol for sharing resources using packet-switching among the nodes was described.

US6694471 B1 discloses TCP layer based acknowledgement under retransmission timer control using specific data chunk format.

TCP and UDP are both originated in the 1980s in e.g. a collaboration between the US-governmental "Defense Advanced Research Projects Agency" (DARPA) and the "Information Sciences Institute" of the University of Southern California on partly the before-mentioned publication. TCP and UDP were the two basic transport layers (OSI-layer level 4) protocols of the so-called Advanced Research Projects Agency Network (ARPAnet) which is owned by the US Defense Department. These protocols can stack other protocols and deliver the last to their intended destination.

UDP is a stateless, i.e. connectionless transport layer protocol. That means that UDP uses a simple connectionless transmission model with a minimum of protocol mechanism. UDP provides checksums for data integrity and port numbers for addressing different functions at the source and destination of a datagram. However, it has no handshaking dialogue and, thus, exposes the user's program to any unreliability of the underlying network, and so there is no guarantee of delivery, ordering, or duplicate protection. If error correction facilities are needed at the network interface level, an application may use the Transmission Control Protocol (TCP) or the Stream Control Transmission Protocol (SCTP). UDP is suitable for purposes where error checking and correcting is either not necessary or is performed in the application, avoiding the overhead of such processing at the network interface level. Time-sensitive applications often use UDP, because dropping packets is preferable to waiting for delayed packets which may not be an option in a real-time system. UDP is a minimal message-oriented transport layer protocol that is documented in RFC 768. UDP provides no guarantees to the upper layer protocol for message delivery, and the UDP layer retains no state of UDP messages once sent. The disadvantage of UDP remains in the fact that no confirmation is sent to the source host of a received content.

In RFC 908, it is formulated that RDP provides the application layer with a reliable message transport service, thus, indicating that the layer is the application layer, although RDP itself is on the transport layer as this is the case with TCP.

TCP is also a main transport layer protocol, but, contrary to UDP, TCP is a connection-oriented protocol, which means that it requires handshaking to set up end-to-end communications. Once a connection is set up, user data may be sent bidirectionally over the connection. That means that TCP has a stateful mode and, thus, looks for an existing connectivity, the management and the provision of a reliable data transport between a source host and a destination host. Through the stateful mode of transmission, the multiple complex features would consume, for instance, the loT-relevant resources, and is, therefore, not suitable for the loT.

Other protocols which include a confirmation, e.g. on receipt of a message, are the reliable datagram protocol (RDP [RFC 908] respectively [RFC 1151]) and the reliable user datagram protocol (RUDP [RFC 1151] respectively [RFC 2026]). However, these protocols have not been successful until now due to certain presets. Both, RDP and RUDP have an unchanged header size and are, therefore, not loT-suited. Furthermore, a change in layer before a confirmation can be sent is required, which needs resources, for instance battery, processor as well as an extra time required for confirmation messages and waiting for multiple timeouts when retries are configured. However, in the case of the Internet of Things, these resources should be saved. Even the DNP3-protocol has such discrepancies and is also mainly intended for the so-called supervisory control and data acquisition (SCADA)-applications and has an unchanged header size, which means that it is also not loT-suited. For loT, it would be desirable to have mainly low-powered wireless connectivity solutions which would not transfer much data and, preferably, need a smaller header size.

In the case of, for example, a narrow band Internet of Things, (NB-)loT, various restrictions are unavoidable and should preferably be dealt with to achieve the best outcome. A few examples of these restrictions are respectively:
1. A very low margin on the loT-related service in general, mainly due to the enormous usage, so that some money may come out of it. The loT-margin rises, as the smaller header size, the lower amount of signaling needed and the loT-specific amount of content is in appropriate size transferred over the Internet, respectively;
2. A lean loT-architecture is required, to lower the network- and transmission-costs;
3. The header size should be reduced to a minimum, especially for loT-related traffic;
4. The amount of signalling should be lowest possible, especially for loT-related traffic;
5. Preferably, the majority of the transmissions should be set for a transmission in intervals during the hours of a lower/lowest utilization of the networks, to achieve the needed bandwidth without possible restraints.

As the resources in all their facets of a physical network entity are the true possible bottlenecks of such a network, it would be desirable to have a transport protocol that needs a minimum of resources, but is at the same time reliable considering the confirmation of a message which has been sent.

UDP, without any provision of requesting and upon receiving an acknowledgement, has a bare maximum of only 288 bits and defines the ports of source and destination with length and checksum.

TCP (IPv6; RFC 2460) reaches a minimum of 320 bits and defines the version, traffic class, flow label, payload length, next header (sequence of segments), hop limit, source- and destination addresses.

Both protocols are operating at the transport layer of TCP/IP model and/or the OSI 4 layer of the OSI model.

Due to the prognosis of 7 trillion wireless devices serving 7 billion people by 2020 according to the WWRF, what equals 1.000 loT-abled chips per single person, counted and implemented over the total global population, a look for huge resource allocation, just for e.g. only (NB-)loT would be necessary.

Both, growth and development of (NB-)loT-scenarios are in general hard to estimate as also the acceptance per country could differ, also on the basis of the national legislation. Nevertheless, one could imagine the huge growth in (NB-)loT-use cases, mainly low-powered wireless connectivity solutions and their rapid extensions.

For instance, with the UDP and TCP as head protocols within data transmissions, one either has "fire-and-forget"-modus, i.e. with UDP, which has a very low signaling effort, or one has a very complicated signaling scenario with a lot of requests-and-confirmations and equal, i.e. with TCP, which adds up to the signaling amount for just a single transaction as such.

Therefore, it is desirable to provide an availability to get a resource-saving confirmation on the same level as a request/command was sent out. This would be useful for all (NB-) loT-communications as, for instance, the various H2M-, M2M-scenarios in which a minimized (stateless) signaling with a confirmation on the network level may or will be required and useful. Therefore, as the content within each loT-transmission will be smaller, mainly low-powered wireless connectivity solutions can and will be used within the (NB-)loT-spectrum. Especially in the actually needed loT-transmission, in order to be able to read the best or outmost net value within the reached revenue, the broadcast of data should be stateless and from this, the server does not need to retain neither session nor status information, for instance, about each communication partner for the duration of multiple requests.

It would be desirable to have a transmission mechanism that would combine the advantages of UDP and TCP, while minimizing their disadvantages.

The present invention provides a method for transferring data within a layered architecture of network components according to claim 1.

Further, the proposed method can comprise the steps of:
a1) starting timing; and
f) checking for receipt of the acknowledgment message within a predefined and stored time interval.

That means that the method step a) is extended by starting timing, i.e. beginning to measure the time, when the at least one data unit is sent to the destination source in order to be enabled to measure the time starting from the point of time when the at least one data unit is brought on its way to the destination source and to further check whether the at least one data unit reaches the destination source by further checking in a method step f) whether the acknowledgment message is received at the source host within a predefined time interval as such an acknowledgment message can only be constructed on the basis of the protocol header information of the data unit when the data unit is actually received at the destination host.

In the case the source host did not receive the acknowledgement message within the predefined and stored interval, the at least one data unit is automatically resent to the destination host.

Data units may be lost on the network or suffer from long delays. To cope with this, the source host expects the acknowledgement message of correct receipt from the receiver/destination host within a certain amount of time. On timeouts, the source host must assume the data unit was not received and retransmit it. In case of a permanently broken link, the retransmission has no effect, so the number of retransmissions is limited. Exceeding the retry limit is considered an error.

In the case that the source host did receive the acknowledged message within the predefined and stored interval, it is continued with step a) with further data blocks.

According to a preferred embodiment of the claimed method, the data blocks are encapsulated in at least one datagram or at least one jumbogram. The data packets of the proposed stateless transport protocol with confirmation, briefly called SLPwC in the following, are called datagrams or jumbograms.

Generally, a jumbogram is an Internet layer packet exceeding a standard maximum transmission unit (MTU) of an underlying network technology. Normally, a payload length of IPv4 and IPv6 has a size of 16 bits, thus allowing data of up to 65.535 octets. While IPv4 has no facilities to exceed its theoretical IP MTU limit, IPv6 provides a protocol to permit packets of lager size.

The data blocks can also be encapsulated in any other suitable data units.

By applying the proposed method, the signaling effort can be kept as low as possible and, thus, any buffer-bloats in network routers can be avoided while integrating a sending out of acknowledgment messages/confirmations on a same network layer/level. One of the major (NB-)loT-issues is to have a minimized signaling which in such leads to a saving of needed resources of especially mainly low-powered wireless connectivity solutions, especially with a still performed checksum in every node and a smaller sized loT-content. Examples of smaller sized loT-contents can be imagined, for instance, from a smart-home perspective and/or the communication with personal utilities. An essence of loT-content is to trigger an action from another entity, or to give a status-reporting. The loT-messaging is to be conducted with certain virtues to strongly reduce costs and, thus, rises the possibility to earn on loT. A small power-consumption of e.g. (independent) sensors and their antennas and, thus, a small-sized transmission of optimized data for loT may enable loT to give positive revenue to network-providers.

The proposed method is suitable for (NB-)loT-requirements as it combines the best of both, TCP and UDP, namely a stateless transmission with an acknowledgement message/confirmation on one and the same level, namely the transport layer. The proposed method is applied just above the layers of a network layer with a basic Internet Protocol (IP), OSI-layer 3, data link layer, OSI-layer 2 and the physical network OSI-layer 1. Therefore, the transmission performed by applying the proposed method is on the transport layer, on top of the IP and with this on OSI-layer 4.

When applying the proposed method, all (NB-)loT-objects could establish a stable and possibly even redundant connectivity to the Internet and, therefore, to its owner/user, possibly to an agency, an authority, a service-provider, etc. To ensure a long life-span for all loT-enabled objects which may be battery-equipped, both a computing effort and an independent power supply should be safe as much as possible, i.e. to the maximal achievable extent. Therefore, an essential idea of the proposed method is the fact that all communication needed is preferably kept on the same layer, e.g. the same OSI-layer, namely on the transport layer.

According to a further embodiment of the proposed method, the protocol header size of the data unit which is to be transferred from the source host to the destination host is kept as small as possible. The protocol header of the at least one data unit comprises source and destination port numbers and a non-cumulative message number of the at least one data unit. Further, the protocol header comprises at least one of the following items: a synchronization field, an acknowledgement field, a push-function field, a reset-function field, a null-function field, a version number of a used software field, data length of the at least one data unit and a checksum. Preferably, the protocol header holds all of the named fields and, thus, consists, for example, of only 64 bits. Therein, the synchronization field needs 1 bit, the acknowledgement field needs 1 bit, the push-function field needs 1 bit, the reset-function field needs 1 bit, the null-function field needs 1 bit, the version number of a used software field needs 3 bits, the data length in the data-/jumbogram needs 8 bits, the source port needs 8 bits, the destination port needs 8 bits, the message number of the data-/jumbogram needs 16 bits, and the checksum needs 16 bits.

All header fields, respectively header areas in the proposed protocol header of the data unit are always less, equal or a multiple of 8 bits in length, respectively, in order to be able to be used on even a legacy-machinery in networks.

According to a further embodiment of the proposed method, when constructing the acknowledgement message on the basis of protocol header information of the at least one received data unit, the message number is used as a message-ID and the value of the acknowledgement field is set to "1". An acknowledgement message consists of two important issues, namely the value of the acknowledgement field and the non-cumulative and thus unchanged message number. The message number should in the received confirmation respond to the message sent and the value of the acknowledgement field is "1" for the confirmed status. Thus, the source host knows that the sending-out was successful and can delete information about the data unit as it would not be needed for a resending of the data unit.

In the case that the at least one data block is too large, it must be packed into multiple data units. However, the transmission based on the above-mentioned new protocol is based on both, stateless connection and unreliable hosts, but the reliability is provided by possibly two features, namely respective acknowledgement messages wherein each acknowledgment message includes a respective message-ID in terms of the message number. A respective sequence in these acknowledgment messages with their respective sequence numbers is non-existing in SLPwC. This is also not required as loT-related messages will generally do not include greater content and, thus, do not need to be divided into several data units, or UDP/TCP remain available for messages which large-size contents.

One main feature of the SLPwC transport layer is the ability for the source host, i.e. the transmitter of the at least one data unit to request the destination host to confirm that the sent data unit has arrived on the same transport layer. To this, a message stream of various data units will also include both, a message ID for each data unit in terms of the message number, and through that a confirmation identifier. Due to this information, the destination host will know the sequence of each portion of an entire message flow and can put the received data units in a correct order.

In the transmission of the protocol specific data units, the respective module specified for the stateless protocol with confirmation which has to be implemented on all relevant nodes on the respective transmission path, such as gateways etc. which are to be negotiated on the way from the source host to the destination host, must be able to recognize both, the source and destination Internet address data as well as the used software version of the stateless protocol with confirmation from the Internet header. Upon receiving the datagram or the jumbogram at the destination host on the respective SLPwC/IP-interface, the entire Internet header information is copied and included in the acknowledgment message upon receipt of the at least one data unit by the destination host, to the source host.

It is to be stated that the data length is 8 bit, which corresponds to 1 octet in length, as the amount of data in loT-messages is truly basic and purposeful. loT-messages do not have the amount of content as personal messages may/will have. The ports are as a standard 8 bits which range from 0 to 255 decimal figures. The message number and checksum are both in the 16 bit (2 octets) size as loT-messages do not have the amount of content as "normal" messages would have. The sequence as such may in most loT-scenarios be lost as no follow-up is needed.

According to a further embodiment of the proposed method, the method can be applied in the TCP/IP-model and/or in the OSI-model.

By applying the proposed method, signaling can be minimized between the source host and the destination host, while an acknowledgement message is provided on the same layer, thus, saving resources in processor actions and battery life. Due to the smaller content sizes of loT-messages, and the reduction in the header size, the amount of transferred content can be minimized.

The described method enables the sending-out of a confirmation acknowledgement message without changing the layers of the network architecture. Thus, no change to another layer, e.g. another OSI-layer, evolves.

If an acknowledgement message is not sent out towards the source host, the source host waits until a predefined time interval expires in its logbook for the relevant message identifier (which corresponds to the message number). As soon as the chosen and predefined time interval expires, the data unit is sent once again with a new message identifier to the destination host on the basis of the described stateless protocol with confirmation SLPwC.

The here described stateless protocol in the following also called "stateless protocol with confirmation, SLPwC" is capable of transferring data in datagrams and/or in jumbograms, i.e. in continuous streams of octets in up to even multiplexing direction. The transfer evolves from the source host to the destination host. However, no connectivity on the way from the source host to the destination host is checked, i.e. the transmission is a stateless transmission. As such, a connection is established between an unreliable source host and an unreliable destination host over an unreliable Internet communication infrastructure. This established connection just turns out to be reliable as the destination host confirms a correct receipt of the data unit by means of an acknowledgement message.

The acknowledgment message as provided by the present invention provides a very high degree of mostly needed assurance of reliable communication. The sending of such an acknowledgment message is initiated by the source host. That means that sending of the acknowledgment message is realized via a push function for the confirmation. The push function is part of the protocol specific header of each data unit. A typical example for requested assurance of a reliable communication can be found in nearly all human-to-machine (H2M) scenarios. The sending of the acknowledgment message includes the stateless transmission of the confirmation identifier/message number of the confirmed data transmission. The initial source host can check on the basis of the acknowledgment message if all data have been received in the correct order. In the case that a data stream is damaged or simply not received, no confirmation/acknowledgment message is sent. In this case, the transmission of the respective data unit is retried again after a predefined time interval, particularly on the basis of a logbook for the data transmission of the source host which can be configured for each transmission.

As already mentioned above, the proposed stateless protocol with confirmation (SLPwC) is not connection-oriented and thus stateless. As such, the proposed stateless protocol is not suited for e.g. a pipelining feature as it is connectionless. In the case of a transmission of a large data set in which the data set has to be segmented in more than one data unit, each data unit is sent out independently, which means that the separate acknowledgment messages are coming independently to each other. As all corresponding acknowledgment messages are received, the correct transmission of all data units is acknowledged and must not (partly) be retransmitted.

Although the proposed stateless protocol is connectionless, it is, however, a reliable transport protocol as a confirmation in terms of the proposed acknowledgment message is also sent out on the transport layer on which the data unit was originally sent out by the respective source host. Therefore, a lower resource utilization due to the not needed layer changes and, therefore, a lower processor load with an extended battery life as well as a longer endurance in active operation can be reached in comparison with, for example, TCP. The delivery of the data units is unordered as it is the case in all stateless transmissions. It contains a checksum with a checksum size which is adapted for the Internet of Things (loT)-purposes. The proposed stateless transport protocol with confirmation requires a different built-up for the transmission on OSI-layer 4, the transport layer. Especially in (NB-)loT-scenarios, the message sizes will generally be just a fraction of a content of a regular message and as such in general a need to perform a sequencing, respectively, a chaining of messages will not evolve. Further, it lacks a windowing and a flow control on the message as a majority of the loT-scenarios would not need such a control.

(NB-)loT-messages will generally have a more minimized content. Therefore, the proposed stateless protocol can be used whose protocol header can consist, for example, of only 64 bits. The protocol header enholds information to:
- the synchronisation (SYN) field [1 bit],
- the acknowledgment (ACK) field [1 bit],
- the push-function (PSH) field [1 bit],
- the reset-function (RST) field [1 bit],
- the null-function (NUL) field [1 bit],
- the version-number (vers.-no.) of used software field [3 bits],
- data length in the data-/jumbogram (SLPwC-length) [8 bits],
- source port [8 bits],
- destination port [8 bits],
- the message number of the data-/jumbogram [16 bits],
- the checksum [16 bits],

All fields of the proposed protocol header are always less, equal or a multiple of 8 bits in length in order to be able to be used on even legacy-machinery in networks. It is possible that the header structure and size for the fields "message number" and "checksum" are altered in dependence from the size or load of the at least one data unit while the number of fields of the header remains unchanged. With this, it could even decrease the spaceband needed for the message number and the checksum, if the content of the data unit is small enough. Probably, it could be decreased down to only 48 bits.

The acknowledgment message which is to built out of the protocol header consists of two important issues:
1. the value of the acknowledgment (ACK)-field, and
2. the non-cumulative and, thus, unchanged message number.

That means that the acknowledgement message contains the message number of the message which has been sent from the source host to the destination host. Thus, the logic effort is lowered compared to other existing similar protocols such as TCP.

The message number should in the received acknowledgment message, respond the data unit sent, and the value of the acknowledgment field is set to "1" for indicating the confirmed status. Thus, the source host knows that the sending out of the respective data unit was successful. Information concerning the data unit can be deleted as it is no more needed for a resending of the respective data unit.

The data length is 8 bits (1 octet in length) as the amount of data in loT-messages is truly basic and purposeful. loT-messages do not have the amount of content as personal messages may have.

The ports are, as a standard, 8 bits, which ranges from 0 to 255 decimal figures.

The message number and checksum are both in the 16 bit (2 octets)-size due to the fact that loT-messages do not have the amount of content as a normal message would have. The sequence as such may in most loT-scenarios be lost as no follow-up is needed. However, if a follow-up is needed, UDP or TCP is to be used for transferring the respective data.

With a minimized signaling in header size, according to the proposed stateless transport protocol, and with the acknowledgment given on the same level as the receipt of the respective data unit, a reduction in processor load and battery utilization can be reached. One feature of the proposed primary stateless transport protocol which can be used as already indicated in the transport layer (OSI 4) is the ability for the transmitter, i.e. the source host of the data unit to request the receiver, i.e. the destination host to confirm that the sent data unit has arrived on the same transport layer. As a confirmation is received at the source host from the destination host, the confirmation is added to a logbook functionality. With the logbook functionality, the entire process can be closed as far as stateless sending out of the datagram (IPv4)/jumbogram (IPv6) is concerned. As such a retry of a transmission is not needed anymore and the resource is available again for any next transmission over the same port by the appropriate node.

The defined and described primary stateless transport protocol SLPwC enables a lowest rise in IP-signaling with an acknowledgment/confirmation and may from that point be very well suited for (NB-)loT-scenarios. It may even be taken for any other communications. The described stateless transport protocol brings one advantage and bringing up a lowest interface load. The resources of e.g. loT-equipment at/in/near for example animals, humans, objects etc. are saved by the proposed protocol with the assurance that traffic did reach the intended destination host in a good order.

loT as well as other communications may preferably not need the complexity of other existing protocols, but would nevertheless need a confirmation/acknowledgment as, for instance, H2M would probably require in various scenarios. However, the H2M-communications do not require a multitude of different status between various request and answering modes, but solely a basic stateless retransmission with an addition of an acknowledgment/confirmation.

As the amount of content for (NB-)loT will be reduced to a command-line, a machine status etc., the amount is much smaller as with conventional protocols. Therefore, the header size can change.

The proposed acknowledgment message is intended for particularly three items.
1. In especially a human-to-machine (H2M) scenario, the customer/user would get a response to his initiated command, and, therefore, the assurance that an issue is started to be performed by the respective machine.
2. In several cases, such a security of premises is an issue, a whole set of transmission may be required which is not completely needed for the confirmation that the security issue is set or is performing. The signaling and the IP-header size with information should be reduced for especially loT-scenarios as the content loT-content will be in an approximate size of, for instance, only a command-line or a status-report.
3. If messages/packages/datagrams/jumbograms are not confirmed as being received by a destination host after being sent out to the destination host, then, by means of a time-dependent mechanism, a resending of the content of the respective data unit to the specific destination host can be performed. If, on the other hand, a destination host remains not confirming/unreachable for the sent data unit, the before-mentioned resending stops after a certain retry. The time-dependency and/or the amount of retries are preferably configurable.

The present invention further refers to a system operative in a layered architecture of network components according to claim 8.

The claimed system is configured to carry out the claimed method.

Further features and embodiments of the invention will become apparent from the description and the accompanying drawings.

It will be understood that the features mentioned above and those described hereinafter can be used not only in the combination specified but also in other combinations or on their own, without departing from the scope of the present invention.

The invention is schematically illustrated in the drawings by way of example embodiments and is explained in detail with reference to the drawings. It is understood that the description is in no way limiting on the scope of the present invention and is merely an illustration of a preferred embodiment of the invention.

The invention is defined by the appended claims. The embodiments not falling in the scope of the claims shall be treated as examples suitable for understanding the invention.

### Brief description of the Drawings

In the drawings,
Figure 1 is a schematic view of a layered architecture and its relation to one embodiment of the proposed protocol as used in one embodiment of the system according to the present invention;
Figure 2a is a schematic view of one embodiment of a protocol header according to one embodiment of the method according to the present invention;
Figure 2b is a schematic view of another embodiment of a protocol header according to another embodiment of the method according to the present invention;
Figure 3 is a schematic view of a message flow according to one embodiment of the method according to the present invention; and
Figure 4 is a schematic view of another message flow according to another embodiment of the method according to the present invention.

### Detailed description of the Drawings

Generally, it is known in protocol design that the protocols are layered. Layering is a design principle which provides, instead of using one single protocol, a number of smaller protocol (parts), each of which accomplishes a specific subtask, and interacts with the other protocol (parts) only via well-defined ways.

Particularly, communication protocols are structured using a layering scheme 10 as a basis. Thus, a set of cooperating protocols is used. The layering scheme 10 in use on the Internet is called the TCP/IP model. The actual protocols are called together the Internet protocol suite. The OSI seven layer model is another reference model used for layering. The OSI model can be applied to any protocol, not just the OSI protocols.

Generally, a hardware delivery mechanism layer 11 is used to build a connectionless packet delivery system. This hardware delivery mechanism layer 11 is also called network interface layer. The network interface layer 11 is responsible for accepting IP datagrams from the Internet layer 12 and transmitting them over a specific network. A network interface may consist of a device driver. The network interface layer 11 uses physical addresses while all the other layers only use IP addresses.

Above the network interface layer 11 is stacked the Internet layer 12 which handles the communication between machines. Packets to be sent are accepted from the transport layer 13 along with an identification of the receiving machine. Packets to be sent are encapsulated in IP datagrams and each datagram header (IP header) is filled. Each IP datagram is passed to an appropriate network interface for transmission. Incoming IP datagrams are checked for validity and a routing mechanism is used to decide whether the IP datagram should be processed locally or forwarded. If the IP datagram is addressed to the local machine, the IP header of the IP datagram is deleted and an appropriate transport protocol is chosen from the encapsulated protocol header. Then the data packet is passed to the transport layer 13.

The transport layer 13 is located above the Internet layer 12 and beneath higher layers 14, the so-called application layers. The transport layer 13 provides communication from one application to another. A stream of data coming from the higher layers 14 is divided into data units, i.e. into data packets by a respective transport protocol module and each data unit/packet is passed to the Internet layer 12 for transmission.

To send data from a source host to a destination host, a top module located in the top layer interacts with a module of a layer directly below it and hands over the data to be encapsulated. This module reacts by encapsulating the data in its own data area and filling in its header data in accordance with the protocols it implements and interacts with the module below it by handing over this newly formed data unit. The bottom module belonging to the network interface layer 11 directly interacts with a respective bottom module of the destination host, so the data are sent across. On the destination host, the reverse happens, so ulti-matively the data get delivered in its original form to a respective top module of the destination host.

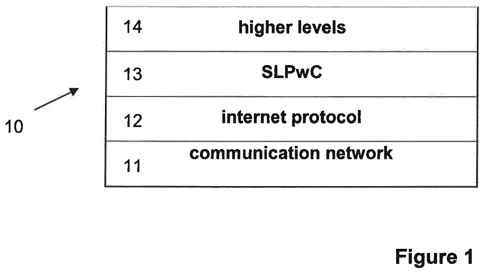

Figure 1 schematically shows the embedding of the proposed transport protocol SLPwC into such a protocol layering scheme. The proposed stateless transport protocol with confirmation is implemented on the transport layer 13, i.e. it belongs to the functional class of the transport protocols. SLPwC is a horizontal protocol as it belongs to a horizontal protocol layer. Due to the protocol layering principle the proposed transport protocol SLPwC is designed so that the transport layer at the destination host receives exactly the same object sent by the transport layer 13 at the source host. The data for transmission are to be encapsulated in a data area of all lower protocols. Thus, the data units/packets coming from the transport layer 13 are to be encapsulated in the data area of an IP datagram which is built in the Internet layer 12. That means that the data area of the IP datagram comprises not only the data to be transmitted but also the protocol header of the SLPwC which has been built in the transport layer 13.

The proposed SLPwC offers the possibility to initiate at the transport layer 13 the sending out of an acknowledgment message upon receipt of the transferred data from the destination host without worrying about the other layers 11, 12 and 14. That means that the other layers 11, 12, and 14 are not involved in this confirmation procedure and, therefore, no change in these layers evolves.

It is to be stated that for communication to take place, the protocols have to be agreed upon.

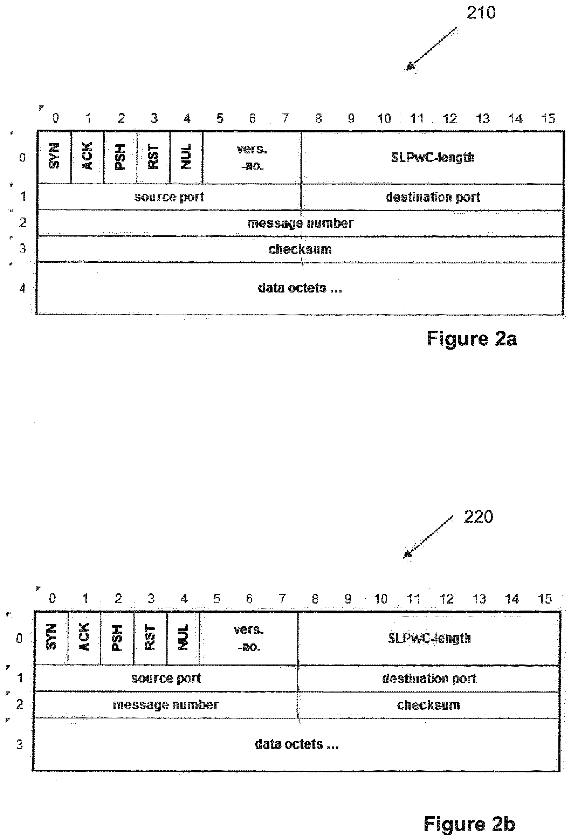

Figure 2 shows two examples of protocol headers as they can be built up according to respective embodiments of the proposed transport protocol when operating according to an embodiment of the proposed method.

Figure 2a shows a protocol header 210 of the SLPwC. The protocol header 210 consists of only 64 bits and encompasses the following items:
- the synchronisation (SYN) field [1 bit],
- the acknowledgment (ACK) field [1 bit],
- the push-function (PSH) field [1 bit],
- the reset-function (RST) field [1 bit],
- the null-function (NUL) field [1 bit],
- the version-number (vers.-no.) of used software field [3 bits],
- data length in the data-/jumbogram (SLPwC-length) [8 bits],
- source port [8 bits],
- destination port [8 bits],
- the message number of the data-/jumbogram [16 bits],
- the checksum [16 bits],

In Figure 2 SYN stands for synchronize, ACK for acknowledge, PSH for push, RST for reset and NUL for end. "vers.-no." declares the version of the used software.

The source port identifies the sender's port, i.e. the port of the source host. It is the port to reply to, i.e. to send the acknowledgment message to upon receipt of the respective data unit at the destination host.

The destination port identifies the receiver's port. i.e. the port of the destination host. The destination port number has a meaning within the context of a particular Internet destination address.

The field "SLPwC-length" specifies the length in bytes of the SLPwC-header and the data to be transmitted.

The message number of the SLPwC header is non-cumulative and, thus, unchanged. The sequence as such may in most loT-scenarios get lost as no follow up is needed. As such, the message number is solely to be seen as a message-ID.

The checksum field may be used for error checking of the SLPwC-header and data.

All fields in the SLPwC header are less, equal or a multiple of 8 bits in length, in order to be able to be used on even legacy machinery in networks. Not part of the protocol header 210 are the also indicated data octets, i.e. the actual content which is to be transmitted.

Figure 2b illustrates an alternative SLPwC header 220 which consists of only 48 bits. As loT-messages do not have the amount of content as a "normal" message would have, the header size can even be further reduced. In the example, shown here, the checksum field and the field of the message number are only 8 bits in length, respectively. The also indicated data octets, i.e. the actual content which is to be transmitted, do not form part of the protocol header 220.

With the minimalized signaling and the minimalized header-size and an acknowledgment given on the same level of receival, the SLPwC is well suited for loT scenarios.

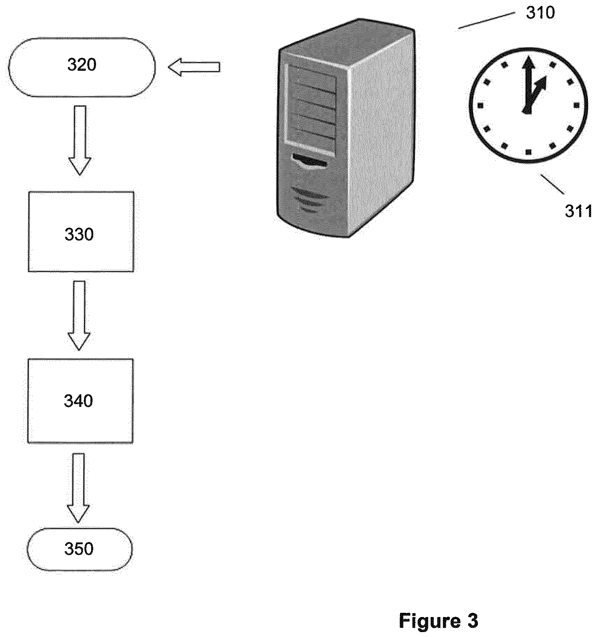

Figure 3 schematically shows a message flow according to an embodiment of the method as proposed by the present invention. A source host 310 encompasses a computer server with a logbook and a timer (visualized by a clock 311). The timer 311 defines a time interval which can be configured for each transmission and which determines how long the source host is waiting for an acknowledgment message for a successful transmission before the respective data packet/data unit is retransmitted. The source host 310 uses an embodiment of the proposed transport protocol SLPwC for broadcasting a data file for download. At the destination host, the file is downloaded in a step 320. From the protocol header of the corresponding broadcasted data packet/data unit, the source port is collected in step 330. In step 340, the source port is used to reply, i.e. to send an acknowledgment message via a server file transfer component (FTC). The acknowledgment message is sent in step 350 back to the source host 310. If the timer at the source host 310 ends without having received an acknowledgment message, the appropriate data packet/data unit is sent out once again. In this case, the timer 311 checks the logbook of the source host 310 and as here no confirmation/acknowledgment message is received, the data packet/data unit is sent out again with a new message number/message ID/message identifier.

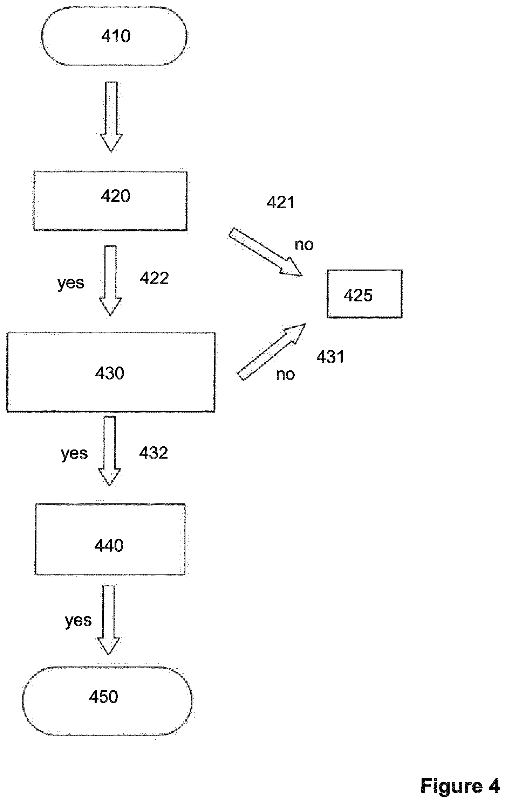

Figure 4 shows another message flow according to another embodiment of the method as proposed by the present invention. A data packet/data unit is sent from a source host to a destination host 410. In step 420, it is checked whether the data packet/data unit is received or not. In the case that the data pack-et/data unit is not received as indicated with arrow 421, no transmission of an acknowledgment message to the source host evolves. Through an internal related logbook entry of the source host, a retransmission of the data packet/data unit will evolve in step 425. In the case that the data packet/data unit is received as indicated with arrow 422, a cyclic redundancy check is performed in step 430. The cyclic redundancy check assures the failing of communication errors in the transmission. In the case that this check reveals communication errors in the transmission as indicated with arrow 431, no acknowledgment message is sent to the source host. Through an internal related logbook entry of the source host, a retransmission of the data packet/data unit will evolve in step 425. However, if there is no communication error in the transmission as indicated with arrow 432, the source port is identified from the protocol header of the received data packet/data unit in step 440. In step 450 an acknowledgement message is sent back to the source host without involving any other layer. Failing to transmit in return an acknowledgment message is based upon e.g. the checksum of the protocol header of the received data packet/data unit and the comparison of it to the checksum field.

## Claims

1. Method for transferring data within a layered architecture of network components via a connectionless transport protocol with confirmation (13), the method comprising at least the following steps:
a) encapsulating data blocks from a source host in at least one data unit specific for the connectionless transport protocol with confirmation (13) and sending the at least one protocol specific data unit via a network infrastructure to a destination host; and in the case that the at least one protocol specific data unit is received at the destination host:
b) delivering the at least one protocol specific data unit to the destination host;
c) constructing an acknowledgment message on the basis of protocol header (210, 220) information of the at least one received protocol specific data unit;
d) sending the acknowledgment message back to the source host; and
e) receiving the acknowledgment message at the source host;
wherein all method steps are processed on a transport layer, wherein step a) comprises:
aa) adding in the protocol header (210, 220) of the at least one data unit, source and destination port numbers, a message number of the at least one data unit and a checksum field, wherein step aa) further comprises: adding in the protocol header (210, 220) at least one of the following items: a synchronisation field, an acknowledgment field, a push-function field, a reset function field, a version-number of used software field, a field for the data length in the at least one data unit, wherein the header structure and size for the fields "message number" and "checksum" are altered in dependence from the size or load of the at least one data unit while the number of fields of the header (210, 220) remains unchanged.

2. Method according to claim 1, wherein the method further comprises the steps:
a1) starting timing when the at least one data unit is brought on its way to the destination host; and
f) checking for receipt of the acknowledgment message within a predefined and stored time interval.

3. Method according to claim 2, wherein the method further comprises the step:
f1) in the case that the source host did not receive the acknowledgment message within the predefined and stored time interval, automatically resending the at least one protocol specific data unit to the destination host.

4. Method according to claim 2, wherein the method further comprises the step:
f2) in the case that the source host did receive the acknowledgment message within the predefined and stored time interval, continuing with step a) with further data blocks.

5. Method according to any one of the preceding claims, wherein the data blocks are encapsulated either in at least one datagram or in at least one jumbogram.

6. Method according to any one of the preceding claims, wherein when constructing the acknowledgment message on the basis of protocol header (210, 220) information of the at least one received data unit, the message number is comprised in the acknowledgement message.

7. The method according to any one of the preceding claims which is used in the TCP/IP model or in the OSI model.

8. A system operative in a layered architecture of network components in which a source host provides data blocks to a destination host via a connectionless transport protocol with confirmation (13), comprising:
source-side program code executable in a hardware processor;
destination-side program code executable in a hardware processor; the source-side program code operative:
A*) to encapsulate data blocks in at least one data unit specific for the connectionless transport protocol with confirmation and to send the at least one data unit via a network infrastructure to the destination host using the connectionless transport protocol and to receive an acknowledgment message sent from the destination host;
the destination-side program code operative:
B*) to receive the at least one data unit and to deliver the at least one data unit via the connectionless transport protocol to the destination host;
C*) to construct the acknowledgment message on the basis of protocol header information of the at least one received data unit;
D*) to send the acknowledgment message back to the source host via the connectionless transport protocol;
wherein the connectionless transport protocol is processing on a transport layer, wherein A*) comprises:
aa) adding in the protocol header (210, 220) of the at least one data unit, source and destination port numbers, a message number of the at least one data unit, and a checksum field, wherein step aa) further comprises: adding in the protocol header (210, 220) at least one of the following items: a synchronisation field, an acknowledgment field, a push-function field, a reset function field, a version-number of used software field, a field for the data length in the at least one data unit, wherein the header structure and size for the fields "message number" and "checksum" are altered in dependence from the size or load of the at least one data unit while the number of fields of the header (210, 220) remains unchanged.

9. The system according to claim 8 which is configured to carry out a method according to any one of claims 1 to 7.

## Patentansprüche

1. Verfahren für das Übertragen von Daten im Rahmen eines Schichtenmodells von Netzwerkkomponenten über ein verbindungsloses Transport-Protokoll mit Bestätigung (13), wobei das Verfahren mindestens folgende Schritte umfasst:
a) Verkapseln von Datenblöcken von einem Quell-Host in mindestens eine für das verbindungslose Transport-Protokoll mit Bestätigung (13) spezifische Dateneinheit und Senden der mindestens einen protokollspezifischen Dateneinheit über eine Netzwerkinfrastruktur an einen Ziel-Host; und in dem Falle, dass die mindestens eine protokollspezifische Dateneinheit am Ziel-Host empfangen wird:
b) Liefern der mindestens einen protokollspezifischen Dateneinheit an den Ziel-Host;
c) Erstellen einer Bestätigungsnachricht auf Basis von Protokoll-Header (210, 220)-Informationen der mindestens einen empfangenen protokollspezifischen Dateneinheit;
d) Senden der Bestätigungsnachricht zurück an den Quell-Host; und
e) Empfangen der Bestätigungsnachricht am Quell-Host;
wobei alle Verfahrensschritte in einer Transportschicht verarbeitet werden, wobei Schritt a) Folgendes umfasst:
aa) Hinzufügen von Quell- und Ziel-Portnummern, einer Nachrichtennummer der mindestens einen Dateneinheit und eines Prüfsummenfelds im Protokoll-Header (210, 220) der mindestens einen Dateneinheit,
wobei Schritt aa) weiterhin umfasst: Hinzufügen mindestens eines der folgenden Gegenstände im Protokoll-Header (210, 220): ein Synchronisationsfeld, ein Bestätigungsfeld, ein Push-Funktionsfeld, ein Rücksetz-Funktionsfeld, ein Feld für die Versionsnummer der verwendeten Software, ein Feld für die Datenlänge in der mindestens einen Dateneinheit,
wobei die Header-Struktur und -Größe für die Felder "Nachrichtennummer" und "Prüfsumme" in Abhängigkeit der Größe oder Last der mindestens einen Dateneinheit geändert werden, während die Anzahl der Felder des Headers (210, 220) unverändert bleibt.

2. Verfahren nach Anspruch 1, wobei das Verfahren des Weiteren die folgenden Schritte umfasst:
a1) Starten der Zeitmessung, wenn die mindestens eine Dateneinheit auf den Weg zum Ziel-Host gebracht ist; und
f) Prüfen des Empfangs der Bestätigungsnachricht innerhalb eines vorgegebenen und gespeicherten Zeitintervalls.

3. Verfahren nach Anspruch 2, wobei das Verfahren des Weiteren den folgenden Schritt umfasst:
f1) in dem Falle, dass der Quell-Host die Bestätigungsnachricht nicht innerhalb des vorgegebenen und gespeicherten Zeitintervalls empfangen hat, automatisches erneutes Versenden der mindestens einen protokollspezifischen Dateneinheit an den Ziel-Host.

4. Verfahren nach Anspruch 2, wobei das Verfahren des Weiteren den folgenden Schritt umfasst:
f2) in dem Falle, dass der Quell-Host die Bestätigungsnachricht innerhalb des vorgegebenen und gespeicherten Zeitintervalls empfangen hat, das Fortfahren mit Schritt a) mit weiteren Datenblöcken.

5. Verfahren nach einem der vorstehenden Ansprüche, wobei die Datenblöcke entweder in mindestens ein Datagram oder in mindestens ein Jumbogram verkapselt sind.

6. Verfahren nach einem der vorstehenden Ansprüche, wobei beim Erstellen der Bestätigungsnachricht auf Basis von Protokoll-Header (210, 220)-Informationen der mindestens einen empfangenen Dateneinheit die Nachrichtennummer in der Bestätigungsnachricht enthalten ist.

7. Verfahren nach einem der vorstehenden Ansprüche, welches in dem TCP/IP-Modell oder dem OSI-Modell zum Einsatz kommt.

8. System, das in einem Schichtmodell von Netzwerkkomponenten wirksam ist, in welchem ein Quell-Host einem Ziel-Host Datenblöcke über ein verbindungsloses Transport-Protokoll mit Bestätigung (13) bereitstellt, umfassend:
quellseitiger Programmcode, ausführbar in einem Hardware-Prozessor;
zielseitiger Programmcode, ausführbar in einem Hardware-Prozessor; quellseitiger Programmcode, wirksam:
A*) um Datenblocks in mindestens eine für das verbindungslose Transport-Protokoll mit Bestätigung (13) spezifische Dateneinheit zu verkapseln und die mindestens eine Dateneinheit unter Verwendung des verbindungslosen Transport-Protokolls über eine Netzwerkinfrastruktur an den Ziel-Host zu senden und die vom Ziel-Host gesendete Bestätigungsnachricht zu empfangen.
zielseitiger Programmcode, wirksam:
B*) um die mindestens eine Dateneinheit zu empfangen und die mindestens eine Dateneinheit über das verbindungslose Transport-Protokoll an den Ziel-Host zu liefern;
C*) um die Bestätigungsnachricht auf Basis von Protokoll-Header-Informationen der mindestens einen empfangenen Dateneinheit zu erstellen;
D*) um die Bestätigungsnachricht über das verbindungslose Transport-Protokoll zurück zum Quell-Host zu senden;
wobei das verbindungslose Transport-Protokoll in einer Transportschicht verarbeitet wird, wobei A*) Folgendes umfasst:
aa) Hinzufügen von Quell- und Ziel-Portnummern, einer Nachrichtennummer der mindestens einen Dateneinheit und eines Prüfsummenfelds im Protokoll-Header (210, 220) der mindestens einen Dateneinheit,
wobei Schritt aa) weiterhin umfasst: Hinzufügen mindestens eines der folgenden Gegenstände im Protokoll-Header (210, 220): ein Synchronisationsfeld, ein Bestätigungsfeld, ein Push-Funktionsfeld, ein Rücksetz-Funktionsfeld, ein Feld für die Versionsnummer der verwendeten Software, ein Feld für die Datenlänge in der mindestens einen Dateneinheit,
wobei die Header-Struktur und -Größe für die Felder "Nachrichtennummer" und "Prüfsumme" in Abhängigkeit der Größe oder Last der mindestens einen Dateneinheit geändert werden, während die Anzahl der Felder des Headers (210, 220) unverändert bleibt.

9. System nach Anspruch 8, welches konfiguriert ist, um ein Verfahren nach einem der Ansprüche 1 bis 7 auszuführen.

## Revendications

1. Procédé de transfert de données dans une architecture en couches de composants de réseau par l'intermédiaire d'un protocole de transport sans connexion avec confirmation (13), le procédé comprenant au moins les étapes suivantes :
a) l'encapsulation de blocs de données d'un hôte source dans au moins une unité de données spécifique au protocole de transport sans connexion avec confirmation (13) et envoi de la au moins une unité de données spécifique au protocole par l'intermédiaire d'une infrastructure de réseau à un hôte de destination; et dans le cas où la au moins une unité de données spécifique au protocole est reçue à l'hôte de destination :
b) l'envoi d'au moins une unité de données spécifique à l'hôte de destination;
c) la construction d'un message d'accusé de réception sur la base de l'information d'en-tête de protocole (210, 220) de la au moins une unité de données spécifique au protocole reçu;
d) le renvoi du message d'accusé de réception au hôte source; et
e) le réception du message d'accusé de réception au niveau de l'hôte source,
toutes les étapes du procédé étant traitées sur une couche de transport, l'étape a) comprenant :
aa) l'ajout des numéros de port de source et de destination, d'un numéro de message de la au moins une unité de données et d'un champ de somme de contrôle dans l'en-tête de protocole (210, 220) de la au moins une unité de données, l'étape aa) comprenant en outre : l'ajout dans l'en-tête de protocole (210, 220) d'au moins un des éléments suivants : un champ de synchronisation, un champ d'accusé de réception, un champ de fonction de poussée, un champ de fonction de réinitialisation, un champ de numéro de version du logiciel utilisé, un champ pour la longueur des données dans la au moins une unité de données, la structure et la taille d'en-tête pour les champs « numéro de message » et « somme de contrôle » étant modifiées en fonction de la taille ou de la charge de la au moins une unité de données, tandis que le nombre de champs de l'en-tête (210, 220) reste inchangé.

2. Procédé selon la revendication 1, comprenant en outre les étapes :
a1) de démarrage de la synchronisation lorsque la au moins une unité de données est acheminée vers l'hôte de destination; et
f) de vérification de la réception du message d'accusé de réception dans un intervalle de temps prédéfini et mémorisé.

3. Procédé selon la revendication 2, comprenant en outre l'étape :
f1) consistant à renvoyer automatiquement la au moins une unité de données spécifique à un protocole à l'hôte de destination si l'hôte source n'a pas reçu le message d'accusé de réception dans l'intervalle de temps prédéfini et mémorisé.

4. Procédé selon la revendication 2, comprenant en outre l'étape :
f2) consistant à poursuivre l'étape a) avec d'autres blocs de données si l'hôte source a reçu le message d'accusé de réception dans l'intervalle de temps prédéfini et mémorisé.

5. Procédé selon l'une quelconque des revendications précédentes, les blocs de données étant encapsulés soit dans au moins un datagramme, soit dans au moins un jumbogramme.

6. Procédé selon l'une quelconque des revendications précédentes, le numéro de message étant compris dans le message d'accusé de réception lorsque le message d'accusé de réception est construit sur la base de l'information d'en-tête de protocole (210, 220) de la au moins une unité de données reçue.

7. Procédé selon l'une quelconque des revendications précédentes qui est utilisé dans le modèle TCP/IP ou dans le modèle OSI.

8. Système fonctionnant dans une architecture en couches de composants de réseau dans laquelle un hôte source fournit des blocs de données à un hôte de destination par l'intermédiaire d'un protocole de transport sans connexion avec confirmation (13), comprenant :
code de programme côté source exécutable dans un processeur matériel;
code de programme côté destination exécutable dans un processeur matériel,
le code de programme côté source fonctionnant :
A*) pour encapsuler des blocs de données dans au moins une unité de données spécifique au protocole de transport sans connexion avec confirmation et pour envoyer la au moins une unité de données par l'intermédiaire d'une infrastructure de réseau à l'hôte de destination en utilisant le protocole de transport sans connexion et pour recevoir un message d'accusé de réception envoyé par l'hôte de destination,
le code de programme côté destination fonctionnant :
B*) pour recevoir la au moins une unité de données et pour transmettre la au moins une unité de données à l'hôte de destination par l'intermédiaire du protocole de transport sans connexion;
C*) pour construire le message d'accusé de réception sur la base de l'information d'en-tête de protocole de la au moins une unité de données reçue;
D*) pour renvoyer le message d'accusé de réception à l'hôte source par l'intermédiaire du protocole de transport sans connexion,
le protocole de transport sans connexion traitant sur une couche de transport, A*) comprenant :
aa) l'ajout des numéros de port de source et de destination, un numéro de message de la au moins une unité de données et un champ de somme de contrôle dans l'en-tête de protocole (210, 220) de la au moins une unité de données, l'étape aa) comprenant en outre : l'ajout dans l'en-tête de protocole (210, 220) d'au moins un des éléments suivants : un champ de synchronisation, un champ d'accusé de réception, un champ de fonction de poussée, un champ de fonction de réinitialisation, un champ de numéro de version du logiciel utilisé, un champ pour la longueur des données dans la au moins une unité de données, la structure et la taille d'en-tête pour les champs « numéro de message » et « somme de contrôle » étant modifiées en fonction de la taille ou de la charge de la au moins une unité de données, tandis que le nombre de champs de l'en-tête (210, 220) reste inchangé.

9. Système selon la revendication 8 qui est configuré pour réaliser un procédé selon l'une quelconque des revendications 1 à 7.
